(19) Europäisches Patentamt
European Patent Office
Office européen des brevets

(11) **EP 2 422 018 B1**

(12) **EUROPÄISCHE PATENTSCHRIFT**

(45) Veröffentlichungstag und Bekanntmachung des Hinweises auf die Patenterteilung:
**09.10.2013 Patentblatt 2013/41**

(21) Anmeldenummer: **10713836.4**

(22) Anmeldetag: **07.04.2010**

(51) Int Cl.:
*E02F 3/43* (2006.01)     *A01B 63/111* (2006.01)
*B66F 9/20* (2006.01)     *G01C 19/00* (2013.01)
*G01C 9/06* (2006.01)     *E02F 9/26* (2006.01)

(86) Internationale Anmeldenummer:
**PCT/EP2010/002165**

(87) Internationale Veröffentlichungsnummer:
**WO 2010/121713 (28.10.2010 Gazette 2010/43)**

(54) **MOBILE ARBEITSMASCHINE MIT EINER POSITIONSREGELEINRICHTUNG EINES ARBEITSARMS UND VERFAHREN ZUR POSITIONSREGELUNG EINES ARBEITSARMS EINER MOBILEN ARBEITSMASCHINE**

MOBILE WORKING MACHINE COMPRISING A POSITION CONTROL DEVICE OF A WORKING ARM AND METHOD FOR CONTROLLING THE POSITION OF A WORKING ARM OF A MOBILE WORKING MACHINE

ENGIN DE CHANTIER MOBILE ÉQUIPÉ D'UN DISPOSITIF DE RÉGULATION DE POSITION D'UN BRAS DE TRAVAIL ET PROCÉDÉ POUR RÉGULER LA POSITION D'UN BRAS DE TRAVAIL D'UN ENGIN DE CHANTIER MOBILE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.04.2009 DE 102009018070**

(43) Veröffentlichungstag der Anmeldung:
**29.02.2012 Patentblatt 2012/09**

(73) Patentinhaber: **Robert Bosch GmbH**
**70469 Stuttgart (DE)**

(72) Erfinder: **GLITZA, Oliver**
**34131 Kassel (DE)**

(74) Vertreter: **Thürer, Andreas**
**Bosch Rexroth AG**
**DC/IPR**
**Zum Eisengießer 1**
**97816 Lohr (DE)**

(56) Entgegenhaltungen:
| | |
|---|---|
| EP-A1- 1 416 095 | EP-A2- 2 042 276 |
| WO-A1-99/35462 | DE-U1- 20 116 666 |
| US-A1- 2004 136 821 | US-B1- 6 691 437 |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine mobile Arbeitsmaschine, beispielsweise einen Bagger, einen LKW mit einem Aufbau oder ein land- und forstwirtschaftliches Gerät, mit zumindest einem Arbeitsarm. Arbeitsarme derartiger Arbeitsmaschinen weisen zumeist mehrere gelenkig miteinander verbundene Segmente auf, wobei an einem Segment, das auch als Stiel bezeichnet wird, ein Werkzeug wie eine Schaufel, ein Greifer oder ein Hammer angebracht ist.

Oftmals wird dem Bediener einer solchen Arbeitsmaschine die aktuelle Position und Stellung des Arbeitsarms und insbesondere auch des Werkzeugs auf einem Display angezeigt, wodurch der Bediener in die Lage versetzt wird, Arbeiten nach genau vorgegebenen Plänen zu verrichten, und eine unmittelbare Rückmeldung über erreichte Höhen, Längen, Tiefen oder Neigungen z.B. eines bewegten Schüttguts oder Erdreichs oder des zu formenden oder bereits geformten Untergrundes bekommt.

Derartige Bieneranzeigen sind beispielsweise aus der DE 201 16 666 U1 und aus der US 5,854,988 A bekannt.

Dabei werden die Position und die Stellung des Werkzeugs auch wegen der guten Nachrüstbarkeit oftmals durch Neigungssensoren bestimmt, die an den einzelnen

Segmenten des Arbeitsarms angebracht sind. Aus den Neigungen der einzelnen Armsegmente kann dann über die bekannten geometrischen Verhältnisse der kinematischen Kette bestehend beispielsweise aus Verstellausleger, Ausleger, Stiel und Werkzeug die Position und Stellung des Werkzeugs berechnet werden.

Da als Neigungssensoren aber auf dem Trägheitsmessprinzip beruhende Sensoren wie beispielsweise gravitationsempfindliche Pendel eingesetzt werden, sind sie auch gegen Beschleunigungen aufgrund von Erschütterungen und Vibrationen empfindlich, wie sie beim Einsatz derartiger Arbeitsmaschinen unvermeidlich auftreten. Derartige bewegungsbedingte Beschleunigungen können die Messung der Position und Stellung des Werkzeugs erheblich stören oder zeitweise unmöglich machen. Eine bekannte Maßnahme zur Unterdrückung dieser Störungen besteht in einer Tiefpassfilterung der Sensorsignale, so dass bewegungsbedingte Beschleunigungen außerhalb des Nutzfrequenzbandes unterdrückt werden.

Dies bringt jedoch mehrere Nachteile mit sich: Zum einen sind Beschleunigungen innerhalb des Nutzfrequenzbandes auf diese Weise nicht unterdrückbar, zum anderen bedingt die Tiefpassfilterung eine zeitliche Verzögerung von bis zu einigen hundert Millisekunden, die jedoch in Kauf genommen wird, weil sie immer noch eine ausreichend genaue Positionsanzeige ermöglicht und die manuelle Bedienung des Arbeitsarms nicht behindert.

Aus anderen technischen Gebieten ist es bekannt, zur Positionsregelung beispielsweise eines Roboters, eines Flugkörpers oder eines Fahrzeugs eine Kombination aus Beschleunigungs- basierten Neigungs- und Drehratensensoren einzusetzen. Die WO 01/57474 A1 offenbart ein derartiges Verfahren, in dem eine Quaternionendarstellung zur Berechnung einer Position benutzt wird.

In der US 6,691,437 B1 wird ein Laser-Referenzsystem für eine Aushubmaschine offenbart. Diese Druckschrift offenbart den Oberbegriff der unabhängigen Ansprüche.

Die WO 99/35462 beschreibt eine Überwachungseinrichtung für einen Mehrelement-Auslegerarm.

Die Gebrauchsmusterschrift DE 201 16 666 U1 beschreibt einen Schwenklöffel für Bagger, gekennzeichnet durch einen direkt am Schwenklöffel angeordneten Neigungssensor.

In der EP 2 042 276 A2 wird eine landwirtschaftliche Maschine und ein Verfahren zur Positionsbestimmung einer Hubvorrichtung und/oder eines Anbaugeräts der landwirtschaftlichen Maschine beschrieben. Die landwirtschaftliche Maschine sowie das Verfahren umfassen ein Fahrzeug, eine mit dem Fahrzeug verbindbare und motorisch betätigbare Hubvorrichtung, an welche ein Anbaugerät koppelbar ist, und eine Einrichtung zur Bestimmung der Position der an das Fahrzeug gekoppelten Hubvorrichtung und/ oder des an die Hubvorrichtung gekoppelten Anbaugerätes.

In der US 2004/0136821 A1 wird eine Steuerung für einen Ausleger und eine Schaufel eines Kompaktladers offenbart.

Aufgabe der Erfindung ist es, eine mobile Arbeitsmaschine mit einer Einrichtung zur Positionsbestimmung anzugeben, die hinreichend kleine Verzögerungszeiten aufweist, so dass sie nicht nur zur Positionsanzeige, sondern auch zur Positionsregelung eines Arbeitsarms der Arbeitsmaschine eingesetzt werden kann. Die Dynamik des Arbeitsarms soll dabei aber nicht eingeschränkt werden. Es ist eine weitere Aufgabe der Erfindung, ein Verfahren für eine derartige Positionsregelung anzugeben.

Erfindungsgemäß wird diese Aufgabe mit dem Gegenstand der unabhängigen Patentansprüche gelöst. Vorteilhafte Weiterbildungen der Erfindung sind Gegenstand der abhängigen Patentansprüche.

Eine erfindungsgemäße mobile Arbeitsmaschine mit Positionsregeleinrichtung eines Arbeitsarms weist einen Arbeitsarm auf, der mit einem ersten Ende an einem Oberwagen der Arbeitsmaschine gelenkig angeordnet ist. An einem zweiten Ende des Arbeitsarms ist ein Werkzeug beweglich angeordnet.

Die Arbeitsmaschine weist ferner eine Anzahl von Sensoren auf, und zwar zumindest einen an dem Oberwagen angeordneten Neigungssensor, mindestens einen an dem Arbeitsarm angeordneten weiteren Neigungssensor und mindestens einen an dem Arbeitsarm angeordneten Drehratensensor. Die Arbeitsmaschine umfasst ferner eine Recheneinheit zur Verarbeitung der Signale des mindestens einen Neigungssensors, des mindestens einen weiteren Neigungssensors sowie des mindestens einen Drehratensensors. Die Recheneinheiten können natürlich aber auch in den am Arm befestigten Sensormodulen untergebracht sein.

Einem Grundgedanken der Erfindung zufolge sollten für eine Echtzeitregelung Verzögerungszeiten von höchstens ca. 250 ms erreicht werden. Dieser Wert kann aber auch in Abhängigkeit der verbauten Arbeitsarm-Hardware und des Einsatzzweckes variieren. Auf eine Tiefpassfilterung der Messwerte mit damit einhergehender Signalverzögerung sollte daher verzichtet werden. Andererseits sollten nach wie vor Neigungssensoren eingesetzt werden, weil diese verhältnismäßig kostengünstig, robust und darüber hinaus leicht nachrüstbar und somit für den Einsatz an mobilen Arbeitsmaschinen besonders geeignet sind. Um die Neigungsmessung weniger anfällig gegen die bereits beschriebenen Störungen durch bewegungsinduzierte Beschleunigungen zu machen, werden zusätzlich Drehratensensoren verwendet. Diese weisen eine hohe dynamische Genauigkeit auf, bringen jedoch Probleme wie Offsets und Rauschen mit sich. Zwar sind Drehratensensoren, die in der avionischen Navigation eingesetzt werden und die auf dem Sagnac-Effekt beruhen und beispielsweise auf dem Einsatz von Faserkreiseln basieren, sehr genau. Mikromechanische Drehratensensoren sind demgegenüber jedoch deutlich kostengünstiger und vor allem auch robuster und daher für den Einsatz an mobilen Arbeitsmaschinen besser geeignet. Wegen der genannten Drift-Probleme solcher Drehratensensoren werden sie erfindungsgemäß mit Neigungssensoren kombiniert.

Diese Lösung hat den Vorteil, dass sie genau auf den Einsatz an mobilen Arbeitsmaschinen zugeschnitten ist, weil sie eine ausreichende Genauigkeit für eine Echtzeitregelung der Position des Arbeitsarms oder eines daran angebrachten Werkzeugs aufweist, gleichzeitig aber kostengünstig zu verwirklichen und sehr robust und wenig störanfällig ist. Die Echtzeitregelung wird somit möglich durch die Kombination von Neigungssensoren mit einer sehr guten statischen Genauigkeit und Drehratensensoren mit einer sehr guten dynamischen Genauigkeit mit Hilfe eines Datenfusions- oder Schätzalgorithmus'.

Der Arbeitsarm kann, eine Anzahl von gelenkig miteinander verbundenen Segmenten aufweisen, wobei das Werkzeug beispielsweise am Ende des letzten Segments angebracht ist. Der Arbeitsarm umfasst in jedem Fall mindestens ein Segment.

In einer Ausführungsform sind an jedem Segment ein weiterer Neigungssensor sowie ein Drehratensensor angeordnet.

In einer alternativen Ausführungsform sind an jedem Segment zwei weitere Neigungssensoren sowie ein Drehratensensor angeordnet. Bei dieser Ausführungsform kann nicht nur eine räumliche Komponente der Beschleunigung (beispielsweise in x-Richtung) gemessen werden, sondern es können zeitgleich zwei Komponenten (beispielsweise in x- und in z-Richtung) gemessen werden, was die Empfindlichkeit der Messung in bestimmten Neigungswinkelbereichen verbessert.

Die Neigungssensoren können auf unterschiedlichen Messprinzipien beruhen und beispielsweise Pendelkörper und/oder refraktierende Flüssigkeitsspiegel aufweisen. Sie können auch als kapazitive oder konduktometrische Neigungssensoren ausgebildet sein, vorzugsweise jedoch als mikromechanische Beschleunigungssensoren.

Die Drehratensensoren sind insbesondere als mikromechanische Sensoren ausgebildet.

Die Positionsregeleinrichtung eignet sich zum Einsatz in mobilen Arbeitsmaschinen wie beispielsweise Baggern, Teleskopladern, Baggerladern, Radladern, Ladekränen oder Forstmaschinen.

Gemäß einem weiteren Aspekt der Erfindung wird ein Verfahren zur Regelung der Position eines Arbeitsarms einer mobilen Arbeitsmaschine angegeben, wobei die Positionsbestimmung folgende Schritte aufweist: Es wird eine auf den Arbeitsarm wirkende Beschleunigung $\bar{a}$ bestimmt. Dies kann beispielsweise in allen drei Raumrichtungen erfolgen, wobei drei Komponenten $a_x$, $a_y$ und $a_z$ mit Hilfe dreier Beschleunigungssensoren gemessen werden. Es kann aber auch ausreichend sein, nur die Beschleunigung in x- und z-Richtung zu messen. Aus der auf den Arbeitsarm wirkenden Beschleunigung $\bar{a}$ wird unter der Annahme eines ruhenden Arbeitsarms ein erster Wert $\vartheta$, für den Neigungswinkel $\vartheta$ berechnet, wobei der Neigungswinkel $\vartheta$ als Winkel definiert ist, um den der Arbeitsarm um eine y-Achse geneigt ist.

Für die am Arbeitsarm angebrachten Beschleunigungssensoren gelten dabei die folgenden Beziehungen, da zur Bestimmung des Neigungswinkels $\vartheta$ eine Koordinatentransformation aus dem Ruhesystem der Segmente des Arbeitsarms bzw. der Sensoren in das Ruhesystem des Oberwagens vorgenommen wird:

$$a_{x,S} = \dot{v}_x - \omega_z v_y + \omega_y v_z - g \sin\vartheta$$
$$a_{y,S} = \dot{v}_y + \omega_z v_x - \omega_x v_z + g \sin\phi \cos\vartheta \qquad (1)$$
$$a_{z,S} = \dot{v}_z - \omega_y v_x + \omega_x v_y + g \cos\phi \cos\vartheta$$

Dabei sind mit a die Messwerte der Sensoren in den Richtungen der körperfesten Achsen x, y und z bezeichnet und der Index S kennzeichnet den jeweiligen Sensor. v bezeichnet die Geschwindigkeit des Arbeitsarms, $\omega$ seine Winkelgeschwindigkeit und $\phi$ und $\vartheta$ die sogenannten Eulerwinkel Rollwinkel und Neigungswinkel. g bezeichnet die Gravitationsbeschleunigung.

Die jeweils ersten Terme der Gleichungen in (1) beschreiben die aus einer Translation der gesamten Arbeitsmaschine oder des Arbeitsarms bzw. Segments resultierende Beschleunigung, während die jeweils mittleren Terme die aus einer Rotation der gesamten Arbeitsmaschine oder des Arbeitsarms bzw. Segments resultierende Beschleunigung beschreiben. Diese Terme beschreiben also jeweils im Gegensatz zum jeweils letzten Term "Störungen", weil sie Beschleunigungen betreffen, die nicht aus dem Einfluss des Schwerefelds der Erde resultieren und somit nicht die Neigung des entsprechenden Sensors im Schwerefeld wiedergeben.

Da der in y-Richtung messende Beschleunigungssensor, wie aus der zweiten Zeile von (1) hervorgeht, bei verschwindendem Rollwinkel $\phi$ lediglich die oben erwähnten Störungen misst, kann gegebenenfalls auch auf ihn verzichtet werden, wenn zur Berechnung des ersten Wertes $\vartheta$, für den Neigungswinkel $\vartheta$ der statische Fall (ruhender Arbeitsarm) angenommen wird. Die durch die erste und dritte Zeile von (1) beschriebenen Beschleunigungssignale werden im Wesentlichen durch lineare Bewegungen in x- und z-Richtung sowie durch Drehungen um die y-Achse (Zentripetal- und Coriolisterme) gestört.

Zur Berechnung des ersten Wertes $\vartheta$, für den Neigungswinkel $\vartheta$ aus den Messwerten der Beschleunigungssensoren wird beispielsweise folgendermaßen vorgegangen:

Aus (1) ergibt sich, wenn ein ruhender Arbeitsarm, also ein statischer Fall, angenommen wird:

$$a_{x,S} = -g \sin \vartheta_s$$
$$a_{y,S} = \phi\, g \cos \vartheta_s \qquad\qquad (2)$$
$$a_{z,S} = g \cos \vartheta_s ,$$

woraus sich der gesuchte erste Wert $\vartheta$, für den Neigungswinkel $\vartheta$ gemäß

$$\tan \vartheta_s = -\frac{a_{x,S}}{a_{z,S}} \qquad\qquad (3)$$

ergibt.

Es wäre auch möglich, wie aus (2) folgt, für einen ruhenden Arm $\vartheta$, mit nur einem Sensor gemäß

$$\sin \vartheta_s = -\frac{a_{x,S}}{g} \qquad\qquad (4)$$

zu bestimmen. Dies bringt jedoch den Nachteil mit sich, dass der Wertebereich von $\vartheta_s$ auf das Intervall -90°...90° eingeschränkt wird. Zumindest für den Stiel einer Arbeitsmaschine, also für dasjenige Armsegment, an dem das Werkzeug befestigt ist, und für das Werkzeug selbst ist dieser Wertebereich zu klein, um die realistischen Verhältnisse zu beschreiben. Hinzu kommt, dass die Empfindlichkeit der Messung dabei wegen der geringen Steigung der Sinusfunktion nahe -90° und 90 ° gering ist. Stattdessen kann auf (2) die Arkustangensfunktion mit zwei Argumenten ("atan2") mit einem Wertebereich zwischen -180° und 180° angewandt werden.

Zur Bestimmung des ersten Wertes $\vartheta_s$ für den Neigungswinkel $\vartheta$ wurde hier die Annahme eines ruhenden Arbeitsarms getroffen. Bei bewegtem Arbeitsarm und bei eventuell drehendem Oberwagen der Arbeitsmaschine werden die Störungen durch die ersten und mittleren Terme in (1) schnell so groß, dass eine Neigungswinkelbestimmung anhand von (3) keine ausreichend genauen Ergebnisse mehr liefert. Für eine Echtzeitregelung der Position des Arbeitsarms ist dieses Vorgehen daher nicht ausreichend.

Es wird daher zusätzlich eine Winkelgeschwindigkeit w des Arbeitsarms, und zwar zumindest eine Komponente $\omega_y$ der Drehung um die y-Achse, gemessen. Aus der Starrkörperkinematik ist nämlich ferner folgendes Gleichungssystem bekannt, das die Drehrate bzw. Winkelgeschwindigkeit w mit den Eulerwinkeln $\vartheta$, $\phi$ und $\psi$ sowie deren zeitlichen Ableitungen in Beziehung setzt:

$$\dot{\vartheta} = \cos\phi \cdot \omega_y - \sin\phi \cdot \omega_z$$
$$\dot{\phi} = \omega_x + \tan\vartheta \sin\phi \cdot \omega_y + \tan\vartheta \cos\phi \cdot \omega_z \qquad (5)$$
$$\dot{\psi} = \frac{\sin\phi}{\cos\vartheta}\omega_y + \frac{\cos\phi}{\cos\vartheta}\omega_z,$$

woraus sich für verschwindende Rollwinkel $\phi$

$$\dot{\vartheta} = \omega_y$$
$$\dot{\phi} = \omega_x + \tan\vartheta \cdot \omega_z \qquad (6)$$
$$\dot{\psi} = \frac{\omega_z}{\cos\vartheta}$$

ergibt.

Somit lässt sich ein zweiter Wert $\vartheta_\phi$ für den Neigungswinkel $\vartheta$ im dynamischen Fall durch Integration der Winkelgeschwindigkeit $\omega_y$ über einen Zeitraum t erhalten:

$$\vartheta_d = \vartheta_0 + \int \omega_y dt \, .$$

Dabei tritt jedoch das Problem auf, dass beispielsweise Offsetfehler und Sensorrauschen kontinuierlich aufintegriert werden, woraus sich auch nach relativ kurzer Zeit derart große Abweichungen vom wahren Neigungswinkel $\vartheta$ ergeben, dass die Genauigkeit der Messung nicht die an sie gestellten Anforderungen erfüllt. Dies ist zumindest der Fall bei der Verwendung mikromechanischer Drehratensensoren. Andere Sensoren wie beispielsweise faseroptische Kreiselsensoren würden eine größere und in vielen Fällen ausreichende Genauigkeit liefern. Sie haben aber den Nachteil hoher Kosten und einer relativ geringen Robustheit, so dass sie für den Einsatz an mobilen Arbeitsmaschinen nicht gut geeignet sind.

Um nun mit den zur Verfügung stehenden Mitteln der Neigungssensoren einerseits, die den statischen Fall gut beschreiben, und dem Drehratensensor andererseits, der zwar den dynamischen Fall gut beschreibt, jedoch über größere Zeiträume Driftprobleme aufweist, einen ausreichend genauen Wert für den Neigungswinkel $\vartheta$ zu erhalten, wird ein Schätzalgorithmus verwendet, um aus den beiden Werten $\vartheta_s$ und $\vartheta_d$ einen Schätzwert $\overline{\vartheta}$ für den wahren Neigungswinkel $\vartheta$ zu erhalten. Aus den in x- und z-Richtung gemessenen Beschleunigungen $a_{x,S}$ und $a_{z,S}$ wird über die atan2-Funktion gemäß (3) der Winkel $\vartheta_s$ für den statischen Fall berechnet, der dann als Stützgröße für die Integration der Drehrate $\omega_y$ verwendet wird. Dazu wird die Differenz aus Integrationsergebnis und Stützwert in den Schätzalgorithmus zurückgekoppelt. Auf diese Weise werden auch fehlerhafte Anfangswerte $\vartheta_0$ abgebaut.

Hierzu können an sich bekannte Schätzalgorithmen verwendet werden, z.B. Kalman-Filter oder aus der Regelungstechnik bekannte Beobachterverfahren, die gegebenenfalls auch zusätzlich den Offsetfehler des Drehratensensors mitschätzen können.

Das Ergebnis ist ein Schätzwert $\hat{\vartheta}$ für den wahren Neigungswinkel $\vartheta$.

Das erfindungsgemäße Verfahren hat den Vorteil, dass mit lediglich drei Sensoren - zwei Beschleunigungssensoren und einem Drehratensensor - eine Positionsbestimmung des Arbeitsarms oder eines bestimmten Punktes des Arbeitsarms, beispielsweise der Aufhängung des Werkzeugs, mit einer Genauigkeit erreicht werden kann, die eine Echtzeitregelung möglich macht.

In einer Ausführungsform weist der Arbeitsarm mehrere gelenkig miteinander verbundene Segmente auf und die Bestimmung von Schätzwerten $\hat{\vartheta}_i$ für die Neigungswinkel wird für jedes Segment einzeln durchgeführt, wobei der Index i für das entsprechende Segment steht.

In einer Ausführungsform wird aus $\hat{\vartheta}$ die Position und die Stellung eines am Arbeitsarm der mobilen Arbeitsmaschine angebrachten Werkzeugs berechnet und diese gegebenenfalls geregelt.

Es kann jedoch aus $\hat{\vartheta}$ auch die Auslenkung mindestens eines dem Arbeitsarm der mobilen Arbeitsmaschine zugeordneten Hydraulikzylinders berechnet und gegebenenfalls geregelt werden.

Ausführungsbeispiele der Erfindung werden im folgenden anhand der beigefügten Figuren näher erläutert.

Figur 1    zeigt schematisch eine als Bagger ausgebildete mobile Arbeitsmaschine gemäß einer Ausführungsform der Erfindung;

Figur 2    zeigt eine Prinzipskizze der geometrischen Verhältnisse an einem Arbeitsarm der Arbeitsmaschine gemäß Figur 1;

Figur 3    zeigt einen Graphen des übergeordneten Signalflusses bei Ausführungsformen der erfindungsgemäßen Positionsregelung;

Figur 4    zeigt ein Diagramm von durch Bewegungen gestörten Neigungssignalen;

Figur 5    zeigt ein Diagramm der Neigungswinkelermittlung mit Tiefpassfilterung;

Figur 6    zeigt ein Diagramm der driftbehafteten Neigungswinkelermittlung mit Hilfe eines Drehratensensors und

Figur 7    zeigt schematisch ein Blockschaltbild für die erfindungsgemäße Schätzung des Neigungswinkels.

Gleiche Teile sind in allen Figuren mit den gleichen Bezugszeichen versehen.

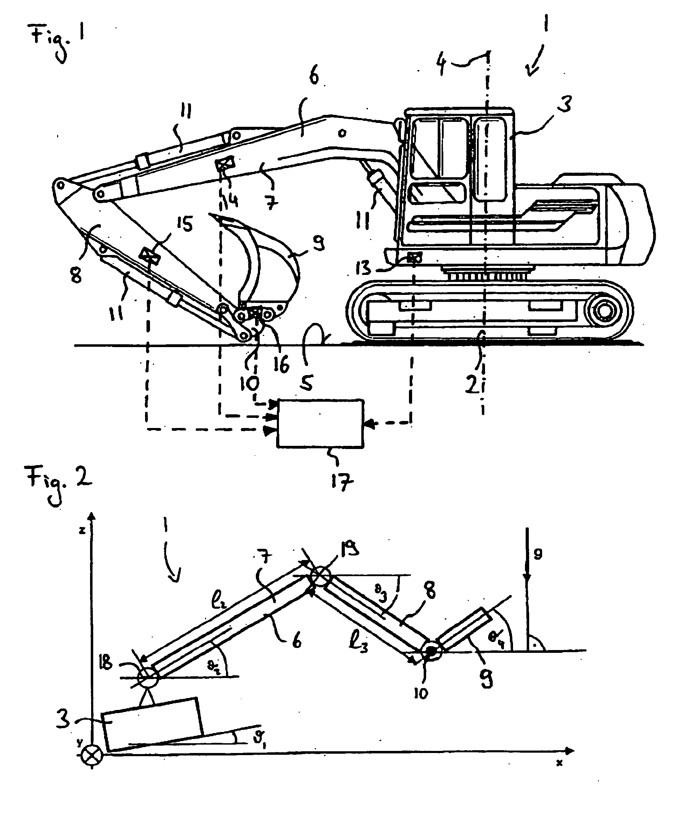

Figur 1 zeigt schematisch eine als Bagger ausgebildete mobile Arbeitsmaschine 1. Die Arbeitsmaschine 1 weist in dieser Ausführungsform ein Basisteil 2 auf, das auf einem Untergrund 5 steht oder fährt, sowie einen Oberwagen 3, der um eine vertikale Achse 4 drehbar ist.

Mit dem Oberwagen 3 gelenkig verbunden ist ein Arbeitsarm 6, der ein erstes Segment 7 und ein zweites Segment 8 umfasst, die ebenfalls gelenkig miteinander verbunden sind. Am zweiten Segment 8 ist ein Werkzeug 9 angelenkt, wobei der Befestigungspunkt des Werkzeugs 9 auch als Tool Center Point (TCP) 10 bezeichnet wird. Zwischen dem Oberwagen und dem ersten Segment 7, zwischen den Segmenten 7 und 8 sowie zwischen dem zweiten Segment 8 und dem Werkzeug 9 sind Hydraulikzylinder 11 angeordnet, die jeweils einen Winkel $\vartheta_i$ definieren.

Am Oberwagen 3 ist eine Sensoreinheit 13, am ersten Segment 7 eine Sensoreinheit 14, am zweiten Segment 8 eine Sensoreinheit 15 und am Werkzeug 9 eine Sensoreinheit 16 angeordnet. Jede Sensoreinheit 13, 14, 15 und 16 umfasst in dieser Ausführungsform zwei Neigungssensoren und einen Drehratensensor, wobei die beiden Neigungssensoren Beschleunigungen in x- und z-Richtung und der Drehratensensor eine Winkelgeschwindigkeit der Rotation um die y-Achse messen.

In einer nicht gezeigten Ausführungsform kann auch auf einen der Neigungssensoren pro Sensoreinheit verzichtet werden und die dem Oberwagen 3 zugeordnete Sensoreinheit kann auch nur einen Neigungssensor, jedoch keinen Drehratensensor aufweisen, falls verhältnismäßig wenig Störungen durch Bewegungen des Oberwagens zu erwarten sind.

Die Messdaten der Sensoreinheiten 13, 14, 15 und 16 werden einer Recheneinheit 17 der mobilen Arbeitsmaschine 1 zugeführt, die daraus eine Positionsbestimmung und -regelung insbesondere des TCP 10 und eine Bestimmung und Regelung der Stellung des Werkzeugs 9 vornimmt. Die Recheneinheit zur Positionsbestimmung kann sich aber auch in den Sensormodulen, die am Arm montiert sind, befinden.

Figur 2 zeigt eine Prinzipskizze der geometrischen Verhältnisse an dem Arbeitsarm 6 der mobilen Arbeitsmaschine 1 gemäß Figur 1.

Der Oberwagen 3 ist um einen Winkel $\vartheta_1$, das erste Segment um einen Winkel $\vartheta_2$, das zweite Segment um einen Winkel $\vartheta_3$ und das Werkzeug 9 um einen Winkel $\vartheta_4$ gegen die Senkrechte zur Richtung der Schwerebeschleunigung g geneigt. Bekannt sind die Abstände $l_2$ und $l_3$ zwischen dem ersten Drehpunkt 18 und dem zweiten Drehpunkt 19 bzw. zwischen dem zweiten Drehpunkt 19 und dem TCP 10, die die Längen des ersten Segments 7 und des zweiten Segments 8 darstellen, so dass durch eine Bestimmung der Neigungswinkel $\vartheta_i$ die Position des TCP 10 und die Stellung des Werkzeugs 9 berechnet werden können. Das heißt, dass im Vorhinein die geometrischen (Konstruktions- ) daten der Armsegmente bekannt sind.

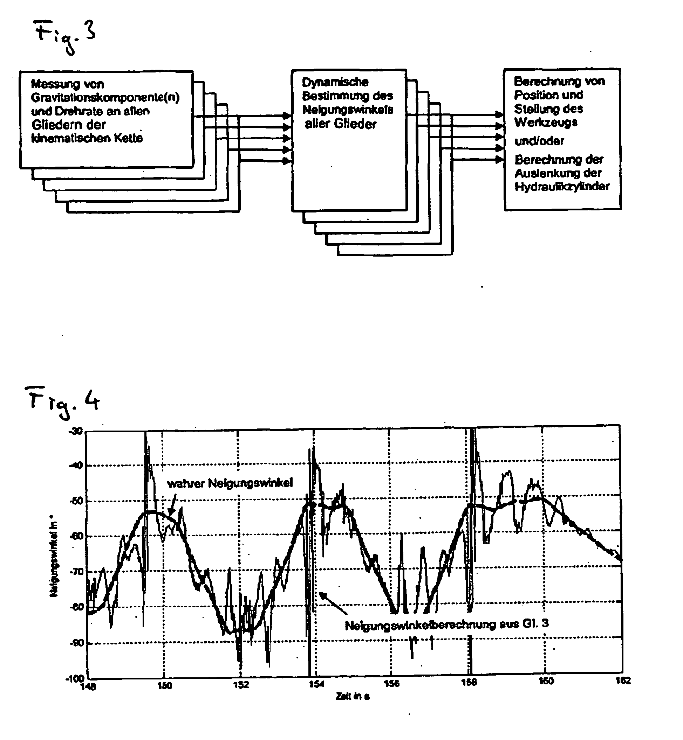

Figur 3 zeigt einen Graphen des übergeordneten Signalflusses bei Ausführungsformen der erfindungsgemäßen Positionsregelung.

Dabei erfolgt in einem ersten Schritt die Messung der Beschleunigungen und die Messung der Drehraten an allen Gliedern der kinematischen Kette, also am Oberwagen 3, am ersten Segment 7, am zweiten Segment 8 und am Werkzeug 9. Aus diesen Messwerten erfolgt die dynamische Bestimmung der Neigungswinkel $\vartheta_i$.

Aus den Neigungswinkeln $\vartheta_i$ kann schließlich, wie im Zusammenhang mit Figur 2 illustriert, die Position und die Stellung des Werkzeugs 9 ermittelt werden. Alternativ oder zusätzlich kann daraus jedoch auch die Berechnung der Auslenkung der Hydraulikzylinder 11 erfolgen.

Figur 4 zeigt ein Diagramm von durch Bewegungen gestörten Neigungssignalen, wie es sich ergibt, wenn die Neigungswinkelberechnung allein aus Gleichung (3), also ausschließlich mit Hilfe von Neigungssensoren, erfolgt. Dabei ergeben sich aufgrund bewegungsbedingter Beschleunigungen teilweise erhebliche Abweichungen des berechneten vom wahren Neigungswinkel.

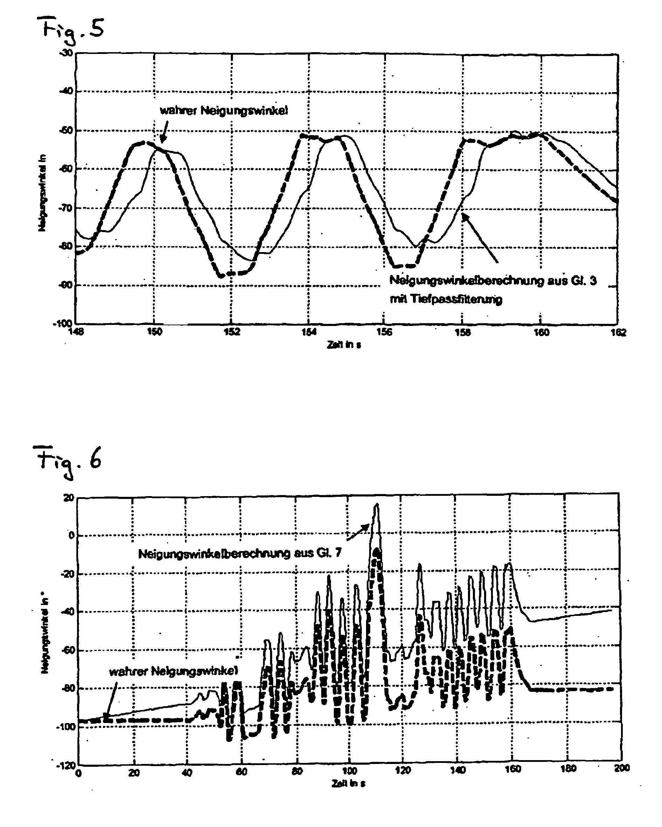

Figur 5 zeigt ein Diagramm der Neigungswinkelermittlung aus Gleichung (3) mit Tiefpassfilterung, wobei die durch die Tiefpassfilterung bedingte zeitliche Verzögerung deutlich wird.

Figur 6 zeigt ein Diagramm der driftbehafteten Neigungswinkelermittlung mit Hilfe eines Drehratensensors gemäß Gleichung (7), also ohne Zuhilfenahme von Neigungssensoren.

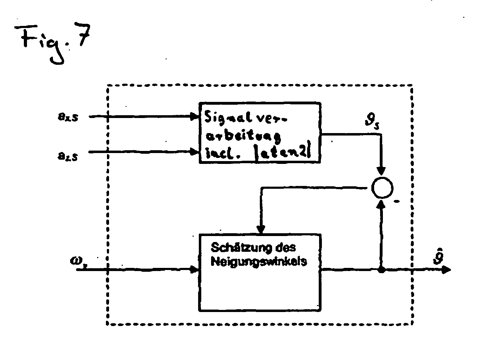

Figur 7 zeigt schematisch ein Blockschaltbild für die erfindungsgemäße Schätzung des Neigungswinkels $\vartheta$ für eine einzelne Sensoreinheit, wobei zunächst die Messwerte $a_{x,S}$ und $a_{z,s}$ der Neigungssensoren der Sensoreinheit zur Berechnung eines statischen Neigungswinkels $\vartheta$, verwendet werden und der Messwert $\omega_y$ des Drehratensensors derselben Sensoreinheit zur Berechnung eines dynamischen Neigungswinkels $\vartheta_d$ aufintegriert wird. Anschließend wird die Differenz aus statischem und dynamischen Neigungswinkel in den Schätzalgorithmus zurückgekoppelt um einen Schätzwert $\hat{\vartheta}$ für den Neigungswinkel zu erhalten.

Als Schätzalgorithmus werden dabei an sich bekannte Verfahren wie beispielsweise Kalman-Filter oder Beobachterverfahren oder davon abgeleitete oder modifizierte Verfahren eingesetzt.

Bezugszeichenliste

1    Arbeitsmaschine
2    Basisteil
3    Oberwagen
4    Achse
5    Untergrund
6    Arbeitsarm
7    erstes Segment
8    zweites Segment
9    Werkzeug
10   Tool Center Point
11   Hydraulikzylinder
13   Sensoreinheit
14   Sensoreinheit
15   Sensoreinheit
16   Sensoreinheit
17   Recheneinheit
18   erster Drehpunkt
19   zweiter Drehpunkt

**Patentansprüche**

**1.** Mobile Arbeitsmaschine (1) mit Positionsregeleinrichtung eines Arbeitsarms (6), aufweisend:

- einen Arbeitsarm (6), der mit einem ersten Ende an einem Oberwagen (3) der Arbeitsmaschine (1) gelenkig angeordnet ist;
- ein Werkzeug (9), das an einem zweiten Ende des Arbeitsarms (6) beweglich angeordnet ist; **gekennzeichnet durch**
- mindestens einen an dem Oberwagen (3) angeordneten Neigungssensor, wobei der Neigungssensor als Beschleunigungssensor ausgebildet ist;
- mindestens einen an dem Arbeitsarm (6) angeordneten weiteren Neigungssensor, wobei der weitere Neigungssensor als Beschleunigungssensor ausgebildet ist;
- mindestens einen an dem Arbeitsarm (6) angeordneten Drehratensensor und
- eine Recheneinheit (17) zur Verarbeitung der Signale des mindestens einen Neigungssensors, des mindestens einen weiteren Neigungssensors sowie des mindestens einen Drehratensensors.

**2.** Mobile Arbeitsmaschine (1) nach Anspruch 1,
wobei der Arbeitsarm (6) eine Anzahl von gelenkig miteinander verbundenen Segmenten (7, 8) aufweist.

**3.** Mobile Arbeitsmaschine (1) nach Anspruch 2,
wobei an jedem Segment (7, 8) ein weiterer Neigungssensor sowie ein Drehratensensor angeordnet sind.

**4.** Mobile Arbeitsmaschine (1) nach Anspruch 2,
wobei an jedem Segment (7, 8) zwei weitere Neigungssensoren sowie ein Drehratensensor angeordnet sind.

**5.** Mobile Arbeitsmaschine (1) nach einem der Ansprüche 1 bis 4,
wobei die Neigungssensoren Pendelkörper aufweisen.

**6.** Mobile Arbeitsmaschine (1) nach einem der Ansprüche 1 bis 5,
wobei die Neigungssensoren refraktierende Flüssigkeitsspiegel aufweisen.

**7.** Mobile Arbeitsmaschine (1) nach einem der Ansprüche 1 bis 6,
wobei die Neigungssensoren als kapazitive, insbesondere fein- oder mikromechanische, Neigungssensoren ausgebildet sind.

**8.** Mobile Arbeitsmaschine (1) nach einem der Ansprüche 1 bis 7,
wobei die Neigungssensoren als konduktometrische Neigungssensoren ausgebildet sind.

**9.** Mobile Arbeitsmaschine (1) nach einem der Ansprüche 1 bis 8,
wobei die Drehratensensoren als mikromechanische Sensoren ausgebildet sind.

**10.** Verfahren zur Regelung der Position eines Arbeitsarms (6) einer mobilen Arbeitsmaschine (1), wobei der Arbeitsarm (6) mit einem ersten Ende an einem Oberwagen (3) der Arbeitsmaschine (1) gelenkig angeordnet ist, wobei ein Werkzeug (9) an einem zweiten Ende des Arbeitsarms (6) beweglich angeordnet ist, **gekennzeichnet durch** mindestens eine Neigungssensor an dem Oberwagen (3) angeordneten ist, wobei der Neigungssensor als Beschleunigungssensor ausgebildet ist, wobei mindestens ein weiterer Neigungssensor an dem Arbeitsarm (6) angeordnet ist, wobei der weitere Neigungssensor als Beschleunigungssensor ausgebildet ist, wobei an dem Arbeitsarm (6) mindestens ein Drehratensensor angeordnet ist und wobei die Arbeitsmaschine (1) eine Recheneinheit (17) zur Verarbeitung der Signale des mindestens einen Neigungssensors, des mindestens einen weiteren Neigungssensors sowie des mindestens einen Drehratesensors aufweist, wobei eine Bestimmung der Position des Arbeitsarms folgende Schritte aufweist:

- Bestimmung einer auf den Arbeitsarm (6) wirkenden Beschleunigung $\overline{a}$;
- Berechnung eines ersten Wertes $\vartheta_s$ für den Neigungswinkel $\vartheta$ aus der auf den Arbeitsarm (6) wirkenden Beschleunigung $\overline{a}$ unter der Annahme eines ruhenden Arbeitsarms (6), wobei der Neigungswinkel $\vartheta$ als Winkel definiert ist, um den der Arbeitsarm (6) um eine y-Achse geneigt ist;
- Messung einer Winkelgeschwindigkeit $\omega_y$ des Arbeitsarms (6) um die y-Achse unter Verwendung des Drehratensensors;
- Integration der Winkelgeschwindigkeit $\omega_y$ über einen Zeitraum t, um einen zweiten Wert $\vartheta_d$ für den Neigungswinkel $\vartheta$ zu erhalten und
- Verwendung eines Schätzalgorithmus, um aus dem ersten Wert $\vartheta_s$ und dem zweiten Wert $\vartheta_d$ einen Schätzwert $\hat{\vartheta}$ für den Neigungswinkel $\vartheta$ zu erhalten.

**11.** Verfahren nach Anspruch 10,
wobei der Arbeitsarm (6) mehrere gelenkig miteinander verbundene Segmente (7, 8) aufweist und die Bestimmung von Schätzwerten $\hat{\vartheta}$ für die Neigungswinkel $\vartheta_i$ für jedes Segment (7, 8) einzeln durchgeführt wird.

**12.** Verfahren nach Anspruch 10 oder 11,
wobei aus $\hat{\vartheta}$ die Position und die Stellung eines am Arbeitsarm (6) der mobilen Arbeitsmaschine (1) angebrachten Werkzeugs (9) berechnet wird.

**13.** Verfahren nach Anspruch 10 oder 11,
wobei aus $\hat{\vartheta}$ die Auslenkung mindestens eines dem Arbeitsarm (6) der mobilen Arbeitsmaschine (1) zugeordneten Hydraulikzylinders (11) berechnet wird.

**14.** Verfahren nach einem der Ansprüche 10 bis 13,
wobei zur Bestimmung des Neigungswinkels $\vartheta$ eine Koordinatentransformation aus dem Ruhesystem der Segmente (7, 8) des Arbeitsarms (6) in das Ruhesystem eines Oberwagens (3) der mobilen Arbeitsmaschine (1) vorgenommen wird.

**Claims**

1. Mobile working machine (1) comprising a position control device of a working arm (6), having:

   - a working arm (6) that is arranged in an articulated fashion, by a first end, on a revolving superstructure (3) of the working machine (1);
   - a tool (9) that is movably arranged on a second end of the working arm (6); **characterized by**
   - at least one inclination sensor arranged on the revolving superstructure (3), the inclination sensor being designed as an acceleration sensor;
   - at least one further inclination sensor arranged on the working arm (6), the further inclination sensor being designed as an acceleration sensor;
   - at least one rotation rate sensor arranged on the working arm (6); and
   - an arithmetic logic unit (17) for processing the signals of the at least one inclination sensor, of the at least one further inclination sensor and of the at least one rotation rate sensor.

2. Mobile working machine (1) according to Claim 1, in which the working arm (6) has a number of segments (7, 8) interconnected in an articulated fashion.

3. Mobile working machine (1) according to Claim 2, in which a further inclination sensor and a rotation rate sensor are arranged on each segment (7, 8).

4. Mobile working machine (1) according to Claim 2, in which two further inclination sensors and a rotation rate sensor are arranged on each segment (7, 8).

5. Mobile working machine (1) according to one of Claims 1 to 4, in which the inclination sensors have pendulum bodies.

6. Mobile working machine (1) according to one of Claims 1 to 5, in which the inclination sensors have refracting liquid mirrors.

7. Mobile working machine (1) according to one of Claims 1 to 6, in which the inclination sensors are designed as capacitive, in particular fine mechanical or micromechanical, inclination sensors.

8. Mobile working machine (1) according to one of Claims 1 to 7, in which the inclination sensors are designed as conductometric inclination sensors.

9. Mobile working machine (1) according to one of Claims 1 to 8, in which the rotation rate sensors are designed as micromechanical sensors.

10. Method for controlling the position of a working arm (6) of a mobile working machine (1), the working arm (6) being arranged in an articulated fashion, by a first end, on a revolving superstructure (3) of the working machine (1), and a tool (9) being movably arranged on a second end of the working arm (6), **characterized by** at least one inclination sensor arranged on the revolving superstructure (3), the inclination sensor being designed as an acceleration sensor, at least one further inclination sensor being arranged on the working arm (6), the further inclination sensor being designed as an acceleration sensor, at least one rotation rate sensor being arranged on the working arm (6), and the working machine (1) having an arithmetic logic unit (17) for processing the signals of the at least one inclination sensor, of the at least one further inclination sensor and of the at least one rotation rate sensor, a determination of the position of the working arm having the following steps:

    - determining an acceleration $\bar{a}$ acting on the working arm (6);
    - calculating a first value $\vartheta_s$ for the inclination angle $\vartheta$ from the acceleration $\bar{a}$ acting on the working arm (6), assuming a working arm (6) at rest, the inclination angle $\vartheta$ being defined as the angle at which the working arm (6) is inclined about a y-axis;
    - measuring an angular velocity $\omega_y$ of the working arm (6) about the y-axis using the rotation rate sensor;
    - integrating the angular velocity $\omega_y$ over a period t in order to obtain a second value $\vartheta_d$ for the inclination angle

$\vartheta$, and

- using an estimation algorithm in order to obtain from the first value $\vartheta_s$ and from the second value $\vartheta_d$ an estimate $\overline{\vartheta}$ for the inclination angle $\vartheta$.

11. Method according to Claim 10, in which the working arm (6) has a plurality of segments (7, 8) interconnected in an articulated fashion, and the determination of estimates $\overline{\vartheta}$ for the inclination angles $\vartheta$ is carried out individually for each segment (7, 8).

12. Method according to Claim 10 or 11, in which the position and the attitude of a tool (9) fitting on the working arm (6) of the mobile working machine (1) is calculated from $\overline{\vartheta}$.

13. Method according to Claim 10 or 11, in which the deflection of at least one hydraulic cylinder (11) assigned to the working arm (6) of the mobile working machine (1) is calculated from $\overline{\vartheta}$.

14. Method according to one of Claims 10 to 13, in which a coordinate transformation from the rest system of the segments (7, 8) of the working arm (6) into the rest system of a revolving superstructure (3) of the mobile working machine (1) is undertaken in order to determine the inclination angle $\vartheta$.

**Revendications**

1. Machine mobile de travail (1) dotée d'un dispositif de régulation de la position d'un bras de travail (6) et présentant :

   un bras de travail (6) raccordé de manière articulée à une première extrémité d'un chariot supérieur (3) de la machine de travail (1),
   un outil (9) disposé à déplacement sur une deuxième extrémité du bras de travail (6),
   **caractérisée par**
   au moins un capteur d'inclinaison disposé sur le chariot supérieur (3), le capteur d'inclinaison étant configuré comme capteur d'accélération,
   au moins un autre capteur d'inclinaison disposé sur le bras de travail (6), l'autre capteur d'inclinaison étant configuré comme capteur d'accélération,
   au moins un capteur de vitesse de rotation disposé sur le bras de travail (6) et
   une unité de calcul (17) qui traite les signaux du ou des capteurs d'inclinaison, du ou des autres capteurs d'inclinaison ainsi que du ou des capteurs de vitesse de rotation.

2. Machine mobile de travail (1) selon la revendication 1, dans laquelle le bras de travail (6) présente plusieurs segments (7, 8) reliés les uns aux autres de manière articulée.

3. Machine mobile de travail (1) selon la revendication 2, dans laquelle un autre capteur d'inclinaison ainsi qu'un capteur de vitesse de rotation sont disposé sur chaque segment (7, 8).

4. Machine mobile de travail (1) selon la revendication 2, dans laquelle deux autres capteurs d'inclinaison ainsi qu'un capteur de vitesse de rotation sont disposés sur chaque segment (7, 8).

5. Machine mobile de travail (1) selon l'une des revendications 1 à 4, dans laquelle les capteurs d'inclinaison présentent des corps pendulaires.

6. Machine mobile de travail (1) selon l'une des revendications 1 à 5, dans laquelle les capteurs d'inclinaison présentent des miroirs liquides à réfraction.

7. Machine mobile de travail (1) selon l'une des revendications 1 à 6, dans laquelle les capteurs d'inclinaison sont configurés comme capteurs d'inclinaison capacitifs, et en particulier à mécanique fine ou micromécaniques.

8. Machine mobile de travail (1) selon l'une des revendications 1 à 7, dans laquelle les capteurs d'inclinaison sont configurés comme capteurs d'inclinaison conductométriques.

9. Machine mobile de travail (1) selon l'une des revendications 1 à 8, dans laquelle les capteurs de vitesse de rotation sont configurés comme capteurs micromécaniques.

**10.** Procédé de régulation de la position d'un bras de travail (6) d'une machine mobile de travail (1), dans laquelle le bras de travail (6) est raccordé de manière articulée par une première extrémité à un chariot supérieur (3) de la machine de travail (1), un outil (9) étant disposé à déplacement sur une deuxième extrémité du bras de travail (6), **caractérisé par**

au moins un capteur d'inclinaison disposé sur le chariot supérieur (3), le capteur d'inclinaison étant configuré comme capteur d'accélération, au moins un autre capteur d'inclinaison étant disposé sur le bras de travail (6), l'autre capteur d'inclinaison étant configuré comme capteur d'accélération, au moins un capteur de vitesse de rotation étant disposé sur le bras de travail (6), la machine de travail (1) présentant une unité de calcul (17) qui traite les signaux du ou des capteurs d'inclinaison, du ou des autres capteurs d'inclinaison ainsi que du ou des capteurs de vitesse de rotation, la détermination de la position du bras de travail comportant les étapes suivantes :

détermination d'une accélération ($a$) qui agit sur le bras de travail (6),
calcul d'une première valeur $\vartheta$ de l'angle d'inclinaison $\vartheta$ à partir de l'accélération $a$ qui agit sur le bras de travail (6) en posant l'hypothèse que le bras de travail (6) est au repos, l'angle d'inclinaison $\vartheta$ étant défini comme l'angle sous lequel le bras de travail (6) est incliné par rapport à un axe y,
mesure de la vitesse angulaire $\omega_y$ du bras de travail (6) autour de l'axe y par recours au capteur de vitesse de rotation,
intégration de la vitesse angulaire $\omega_y$ sur une durée t, pour obtenir une deuxième valeur $\vartheta_d$ de l'angle d'inclinaison $\vartheta$ et
utilisation d'un algorithme d'estimation pour obtenir à partir de la première valeur $\vartheta s$ et de la deuxième valeur $\vartheta_d$ une valeur estimée $\overline{\vartheta}$ de l'angle d'inclinaison $\vartheta$.

**11.** Procédé selon la revendication 10, dans lequel le bras de travail (6) présente plusieurs segments (7, 8) reliés les uns aux autres de manière articulée et dans lequel la détermination des valeurs estimées $\overline{\vartheta}$ de l'angle d'inclinaison $\vartheta$ est exécutée séparément pour chaque segment (7, 8).

**12.** Procédé selon les revendications 10 ou 11, dans lequel la position et l'ajustement d'un outil (9) installé sur le bras de travail (6) de la machine mobile de travail (1) sont calculés à partir de $\overline{\vartheta}$.

**13.** Procédé selon les revendications 10 ou 11, dans lequel l'orientation d'au moins un vérin hydraulique (11) associé au bras de travail (6) de la machine mobile de travail (1) est calculée à partir de $\overline{\vartheta}$.

**14.** Procédé selon l'une des revendications 10 à 13, dans lequel une transformation des coordonnées depuis le système au repos des segments (7, 8) du bras de travail (6) jusque dans le système au repos d'un chariot supérieur (3) de la machine mobile de travail (1) est réalisée pour déterminer l'angle d'inclinaison $\vartheta$.

Fig. 1

Fig. 2

**Fig. 3**

| Messung von Gravitationskomponente(n) und Drehrate an allen Gliedern der kinematischen Kette |
| Dynamische Bestimmung des Neigungswinkels aller Glieder |
| Berechnung von Position und Stellung des Werkzeugs und/oder Berechnung der Auslenkung der Hydraulikzylinder |

**Fig. 4**

wahrer Neigungswinkel

Neigungswinkelberechnung aus Gl. 3

**Fig. 5**

**Fig. 6**

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20116666 U1
- US 5854988 A
- WO 0157474 A1
- US 6691437 B1

- WO 9935462 A
- EP 2042276 A2
- US 20040136821 A1